# EUROPÄISCHE PATENTANMELDUNG

(11) **EP 3 838 500 A1**
(43) Veröffentlichungstag der Anmeldung: **23.06.2021**
(21) Anmeldenummer: 19216793.0
(22) Anmeldetag: 17.12.2019
(51) Int. Cl.: B25J 9/08, B25J 15/00, B25J 15/06, B25J 19/00

(54) **KONSTRUIEREN VON GREIFWERKZEUGEN FÜR EINE LASERSCHNEIDMASCHINE ZUM ABSORTIEREN VON TEILEN**

(71) Anmelder: Bystronic Laser AG, 3362 Niederönz (CH)
(72) Erfinder: JOST, Stefan, 4556 Aeschi (CH); MEYER, Alain, 4566 Kriegstetten (CH); JACOBI, Stefan, 59597 Westernkotten (DE)
(74) Vertreter: Schwarz und Baldus Patentanwälte

(57) **Zusammenfassung**

Die vorliegende Erfindung betrifft eine Konstruktionseinheit (KO) und ein Verfahren zum Berechnen eines Konstruktionsdatensatzes (kds) zur Konstruktion eines Part-spezifischen Greifwerkzeuges (W) zum Greifen von Parts (P), die von oder zu einer Verarbeitungsmaschine (L) transportiert werden müssen, mit folgenden Verfahrensschritten:
- Bereitstellen (S1) von Part-Parametern (pp) für zumindest ein Part (P), das mit dem Part-spezifischen Greifwerkzeug (W) gegriffen werden soll;
- Ausführen (S3) eines Konstruktionsalgorithmus (KA), der aus den bereitgestellten Part-Parametern (pp) das Part-spezifische Greifwerkzeug (W) konstruiert und dazu einen Greifwerkzeugdatensatz (gds) als Ergebnis ausgibt.

## Beschreibung

### Beschreibung

Die Erfindung betrifft das Konstruieren von Greifwerkzeugen zum Greifen von geschnittenen oder verarbeiteten Teilen bzw. Parts, die z.B. von einer Laserschneidmaschine geschnitten oder verarbeitet worden sind. Dabei soll das zu konstruierenden Greifwerkzeug spezifisch für das oder die geschnittenen Teile ausgelegt sein.

Die von einer Laserverarbeitungsmaschine verarbeiteten Teile werden üblicherweise auf einer Vorrichtung, z.B. in Form eines Tisches (z.B. eines Wechseltisches) zum Absortieren oder zum Abtransport von einem Roboter bereitgestellt.

Im Stand der Technik sind dazu zwei Typen von Greifwerkzeugen bekannt: Zum Einen spezifische Greifwerkzeuge, die spezifisch für die jeweilige Transportaufgabe bzw. für das zu transportierende Teil konstruiert sind und zum Anderen multifunktionale Greifwerkzeuge, die für unterschiedliche Transportaufgaben bzw. für unterschiedliche Teile (z.B. unterschiedliches Gewicht, Form und/oder Größe der Teile) angewendet werden können.

Die spezifischen Greifwerkzeuge sind prozesssicher, haben aber den Nachteil, dass bei bekannten Systemen im Stand der Technik ein aufwändiger Prozess zur Greifer-Entwicklung durchlaufen werden muss.

Die multifunktionalen Greifwerkzeuge können zwar in unterschiedlichen Anwendungen eingesetzt werden, haben aber den Nachteil, dass sie bei bestimmten Teilen nicht prozesssicher funktionieren.

Hier setzt die vorliegende Erfindung an. Sie hat sich zur Aufgabe gestellt, einen Ansatz bereitzustellen, mit dem Greifwerkzeuge prozesssicher für unterschiedliche Anwendungen (z.B. für unterschiedliche Transportaufgaben und/oder Teile bzw. Parts) angewendet werden können.

Gemäß einem ersten Aspekt der Erfindung wird diese Aufgabe gelöst durch ein computer-implementiertes Verfahren zum Berechnen eines Konstruktionsdatensatzes zur Konstruktion eines Part-spezifischen und insbesondere modularen Greifwerkzeuges (aufgebaut aus modularen Komponenten) zum vollautomatischen, insbesondere roboter-basierten Greifen von Parts, also von Bauteilen, die von einem Roboter transportiert werden müssen. Bei den Parts kann es sich z.B. um verarbeitete oder zu verarbeitende Teile einer Verarbeitungsanlage, z.B. einer Laserverarbeitungsanlage (z.B. einer Laserschneidanlage) oder um Biegeteile einer Biegemaschine handeln. Das Verfahren umfasst folgende Verfahrensschritte:
- Bereitstellen von Part-Parametern für zumindest ein Part, das mit dem Greifwerkzeug gegriffen werden soll. Das Greifen kann zum Absortieren oder Sortieren, zum Transport, zum Zufügen und/oder Entnehmen und/oder zum Sortieren erfolgen bzw. im Rahmen der vorgenannten Prozesse ausgeführt werden.
- Ausführen oder Anwenden eines Konstruktionsalgorithmus, der aus den bereitgestellten Part-Parametern das Part-spezifische Greifwerkzeug konstruiert und dazu einen Greifwerkzeugdatensatz als Ergebnis bereitstellt.

Die hier vorgestellte Lösung hat den Vorteil, dass die Greifwerkzeuge schneller und mit höherer Prozesssicherheit bzw. mit für die jeweilige Greifaufgabe verbesserter Passgenauigkeit bereitgestellt werden können. Der Roboter (Greifroboter) kann somit schneller bestückt und betrieben werden. Damit kann die Prozesszeit insgesamt reduziert werden. Durch die wissensbasierte Konstruktion können die Greifwerkzeuge zudem besser (passender) konstruiert werden und Fehler, die durch manuelle Fehlkonstruktionen bedingt sind, können vermieden werden. Der Konstruktionsalgorithmus berechnet eine für die jeweilige Greifaufgabe (Part, Bewegung) optimale Greifer Geometrie und kann als Ergebnis unter anderem automatisch eine Konstruktionszeichnung des Greifers erstellen (z.B. CAD), falls dieser nicht lokal an der Maschine verfügbar oder assemblierbar ist. Weiterhin kann in diesem Fall automatisch eine Stückliste der benötigten Komponenten (z.B. Sauger, Magnete, Anschlüsse etc.) erstellt werden.

In einer bevorzugten Ausführungsform der Erfindung können die Part-Parameter alle Parameter umfassen, die für die Konstruktion eines Greifwerkzeuges relevant sind, um das Part zu greifen. Die Part-Parameter können ausgewählt sein aus einer Gruppe umfassend: ein Gewicht, einen Schwerpunkt des Parts, Ausschnitte oder Auskragungen im Part, Biege-relevante Parameter und konstruktive und Material-basierte Parameter des Parts. Vorteilhafterweise können die Part-Parameter in einer Konfigurationsphase des Verfahrens konfiguriert werden, um das Verfahren spezifisch auf den jeweiligen Anwendungsfall auszulegen. Das bedeutet, dass konfiguriert werden kann, welche Part-Parameter bei der Konstruktionsberechnung berücksichtigt werden sollen. In einer vorteilhaften Weiterbildung der Erfindung können die Part-Parameter aus einem erfassten Schneidplan berechnet werden. Es wird dann also nur der Schneidplan bereitgestellt und aus dem bereitgestellten Schneidplan werden dann die Parameter berechnet und für den Konstruktionsalgorithmus eingelesen. Damit kann das computer-implementierte Verfahren noch feiner ausgelegt und angepasst werden.

In einer weiteren, bevorzugten Ausführungsform der Erfindung kann das Greifwerkzeug aus einer Menge von Greifwerkzeugkomponenten modular aufgebaut sein. In einer Datenbank können Verfügbarkeitsdaten vorgehalten sein, die repräsentieren, welche Greifwerkzeuge und/oder welche Greifwerkzeugkomponenten (z.B. Sauger, Magnete, Arme etc.) lokal und aktuelle verfügbar sind. Dazu kann eine Verfügbarkeitsdatei vorgehalten und kontinuierlich aktualisiert sein, so dass ein Greifwerkzeug in der Art eines modularen Baukastens aus mehreren Komponenten "auswählbar" bzw. kombinierbar ist. Mit dem bereitgestellten Greifwerkzeugdatensatz wird auf die Datenbank und/oder auf die Verfügbarkeitsdatei zugegriffen. Es können automatisch Assemblierinstruktionen mit einem Auswahlbefehl zur Auswahl der Komponenten zum Zwecke der Montage zu einem Greifwerkzeug bereitgestellt werden.

"Verfügbares Greifwerkzeug" bedeutet entweder ein bereits fertig konstruiertes Greifwerkzeug oder ein aus den verfügbaren Komponenten (z.B. Saugern, Grundplatten, Magneten, Schläuchen, Verbindungselementen) konstruierbares Greifwerkzeug. Falls das Greifwerkzeug bzw. deren Komponenten lokal verfügbar ist/sind, kann eine entsprechende Verfügbarkeitsnachricht, z.B. in Form einer Meldung, auf einer Benutzeroberfläche ausgegeben werden.

Falls das Greifwerkzeug nicht lokal verfügbar ist oder falls nicht alle erforderlichen Komponenten lokal an der Maschine verfügbar sind, wird aus dem Greifwerkzeugdatensatz ein Konstruktionsdatensatz erstellt, der zur Konstruktion des Greifwerkzeuges dient. Der Konstruktionsdatensatz kann z.B. eine Stückliste beinhalten. Der Konstruktionsdatensatz kann auch Assemblierinstruktionen beinhalten.

Bei dieser vorteilhaften Ausführungsform der Erfindung kann somit aus dem Greifwerkzeugdatensatz ein Konstruktionsdatensatz erstellt werden, z.B. in Form einer STEP-Datei - STEP steht für STEP (STandard for the Exchange of Product model data) und ist ein Standard zur Beschreibung von Produktdaten. Er umfasst neben den physischen auch funktionale Aspekte des Greifwerkzeuges. STEP ist formal in der ISO-Norm 10303 definiert. Vorzugsweise wird der Konstruktionsdatensatz nur dann erzeugt, falls das konstruierte Greifwerkzeug nicht lokal verfügbar ist. "Lokal verfügbar" meint in diesem Kontext die Verfügbarkeit auf oder an der Verarbeitungsmaschine. Dazu kann ein Vorratsmodul vorgesehen sein, in dem eine Menge von Greifwerkzeugen mit ihren Komponenten gelagert sind. Dies hat den Vorteil, dass der Konstruktionsdatensatz nur dann erstellt wird, wenn er erforderlich ist und somit kein Werkzeug für die anstehenden Tarnsportaufgabe genutzt werden kann.

Der Begriff "Greifwerkzeugdatensatz" bezieht sich in dieser Anmeldung auf einen elektronischen Datensatz, der dazu dient, ein Greifwerkzeug zu spezifizieren und/oder zu identifizieren und/oder aus einer Menge von unterschiedlichen Greifwerkzeugen zu bestimmen und/oder auszuwählen. Der Greifwerkzeugdatensatz beinhaltet zumindest die folgenden drei Parameter:
1. Greiferart (pneumatisch, magnetisch,..)
2. Greifergröße und
3. Anzahl der Greifer.

In anderen Ausführungsformen der Erfindung können noch weitere Spezifikationen getroffen werden.

Der Konstruktionsdatensatz, der vorzugsweise nur erstellt wird, wenn das Greifwerkzeug nicht bereits schon lokal verfügbar ist, kann eine Stückliste umfassen. Vorzugweise enthält der Konstruktionsdatensatz Konstruktionsdaten zum Erzeugen eines Greiferhalters, an dem unterschiedliche und zumindest die erforderlichen Greifer montierbar sind.

So sind z.B. alle in dem lokalen Lager oder Vorratsmodul der Laserverarbeitungsmaschine verfügbaren Greifwerkzeuge in einer Verfügbarkeitsdatei repräsentiert. Spezifiziert nun der Greifwerkzeugdatensatz, dass für die jeweilige Transport- bzw. Greifaufgabe eine Menge von Greifwerkzeugen A, B und C (mit fertig montierten Komponenten A1, A2, B1, B3, B5 und C) erforderlich ist, so kann mit einem einfachen Zugriff auf die Verfügbarkeitsdatei bzw. mit einer einfachen Lese-Funktion geprüft werden, ob alle Greifwerkzeuge lokal vorhanden sind und der Greifer bestückt und betrieben werden kann. Eine weitere Berechnung des Konstruktionsdatensatzes ist in diesem Fall zur Einsparung von Rechenlast nicht erforderlich. Andernfalls kann die Greifaufgabe nicht mit den lokal verfügbaren Werkzeugen ausgeführt werden und der Konstruktionsdatensatz muss berechnet werden.

In einer bevorzugten Ausführungsform der Erfindung kann der Konstruktionsalgorithmus auf eine Datenbank mit gespeicherten Part- und Greifwerkzeugdaten zugreifen. In der Datenbank können z.B. Zuordnungen von Greifwerkzeugen mit deren Komponenten hinterlegt sein, die jeweils für eine Greifaufgabe erforderlich sind.

Der Konstruktionsalgorithmus kann zweiteilig ausgebildet sein. Er umfasst eine Greiferbestimmungsfunktion zur Bestimmung der Art, der Größe und der Anzahl der minimal erforderlichen Greifer und eine Positionsberechnungsfunktion zur Bestimmung der Position jedes Greifers. Die zwei Funktionen können zu unterschiedlichen Zeitphasen und vorzugsweise sequentiell ausgeführt werden. Die Greiferbestimmungsfunktion wird vorzugsweise vor der Positionsberechnungsfunktion ausgeführt und liest als Eingangsgrößen die Part-Parameter ein. Die Positionsberechnungsfunktion kann das Ergebnis der Greiferbestimmungsfunktion einlesen und kann zusätzlich noch Beschleunigungswerte zur Bewegung des Parts oder weitere Bewegungsparameter einlesen, die die Transportaufgabe des Parts kennzeichnen und /oder Daten aus einem physikalischen Modell des Parts einlesen, um z.B. den Schwerpunkt des Parts anhand der Part-Parameter berechnen zu können.

Grundsätzlich dient der Konstruktionsalgorithmus dazu, abhängig von Form, Material, Materialdicke und/oder Taktzeit die optimale Größe des Greifers, z.B. des Saugnapfs, zu berechnen und berechnet auch, wie viele davon minimal benötigt werden, um eine saubere Entnahme gewährleisten zu können. Diese Information (welcher Saugnapf und wie viele davon) in Abhängigkeit der Beschleunigungswerte, dient als Input zur Berechnung der optimalen Positionierung des Greifkopfes (Positionsberechnungsfunktion). Zum Beispiel, wenn nur ein Saugnapf gebraucht wird, wird die Position so nah wie möglich an das Schwerkraftachse positioniert (Berechnung Schwerpunkt mit physikalischem Modell), um zu garantieren, dass der Part korrekt angehoben wird. Falls zwei und mehr Saugnäpfe erforderlich sind, dann werden diese so weit wie möglich voneinander entfernt aufgebaut.

Zur Ausführung der Positionsberechnungsfunktion kann die Positionsangabe für eine jeweilige Komponente des Greifwerkzeuges konfigurierbar sein. Die Positionsberechnungsfunktion kann einen Brute-Force-Algorithmus, einen zufallsbasierten Algorithmus und/oder eine Mischform ausführen. Diese Ansätze werden genauer in der detaillierten Figurenbeschreibung erläutert.

In einer anderen, bevorzugten Ausführungsform der Erfindung kann das Greifwerkzeug von einem Roboter im Rahmen einer Pick-and-Place Anwendung betrieben wird.

In einer anderen, bevorzugten Ausführungsform der Erfindung kann der Konstruktionsdatensatz eine Stückliste für das konstruierte Greifwerkzeug umfassen (z.B. als STEP Datei). Der Konstruktionsdatensatz kann auch eine Positionsangabe für eine Komponente (z.B. Sauger) des Greifwerkzeuges umfassen.

In einer Weiterbildung kann diese Positionsangabe konfigurierbar sein. So kann z.B. in einer Konfigurationsphase einstellbar sein, dass die Sauger grundsätzlich am Schwerpunkt des Parts angreifen sollen. Dies bietet den Vorteil, dass der Anwender seine spezifischen Erfahrungswerte hier bei der Berechnung einbringen kann (z.B. "Bauteil X ist bei Greifer A bisher immer gekippt und konnte nicht zuverlässig gegriffen -> besser Greifer A' verwenden").

Bei einer weiteren vorteilhaften Ausführungsform der Erfindung kann der Konstruktionsalgorithmus kumulativ oder alternativ zu den Part-Parametern einen elektronischen Schneidplan einer Schneidmaschine (z.B. einer Laserschneidmaschine) und/oder einen Biegeplan einer Biegemaschine eingelesen. Aus dem Schneidplan können z.B. die Form und Größe und weitere Greif-relevante Parameter berechnet werden. Es ist auch möglich, dass nur der Schneidplan eingelesen wird, aus dem dann die Part-Parameter berechnet werden.

Bei einer weiteren vorteilhaften Ausführungsform der Erfindung kann eine Fehlernachricht (oder -meldung) erzeugt und ausgegeben wird, falls der Konstruktionsalgorithmus kein Ergebnis für die anstehende Greifaufgabe berechnen kann bzw. eine Konstruktion des Greifwerkzeuges für das zu greifende Part nicht möglich ist.

In einer weiteren vorteilhaften Ausführungsform der Erfindung kann eine Schnittstelle zu einer Vorratseinheit für Greifwerkzeuge und deren Komponenten einer Automatisierungsanlage und/oder einer Laseranlage und/oder einer Bestellapplikation ausgebildet ist. Es werden entsprechende Instruktionen bereitgestellt, um die jeweiligen Einheiten zu instruieren. So kann z.B. auf ein Instruktionssignal hin, ein automatischer Bestellvorgang für das gemäß Konstruktionsdatensatz konstruierte Greifwerkzeug ausgelöst werden kann. Ebenso kann auf Assemblierinstruktionen hin, die von der Konstruktionseinheit bereitgestellt werden, die Vorratseinheit instruiert werden, die erforderlichen Komponenten auszuwählen und einen Träger oder ein Greiferhalter damit zu bestücken, wobei die von der Positionsberechnungsfunktion berechneten Positionen für die Greifer berücksichtigt werden.

In einem weiteren Aspekt bezieht sich die vorliegende Erfindung auf eine Konstruktionseinheit zum Berechnen eines Konstruktionsdatensatzes zur Konstruktion eines Greifwerkzeuges für eine Verarbeitungsanlage mit:
- Einer Einlese-Schnittstelle zum Einlesen von Part-Parametern für zumindest ein an, auf oder von einer Verarbeitungsmaschine zu greifendes Part;
- Einer Verarbeitungseinheit, die in Antwort auf die eingelesenen Part-Parameter dazu bestimmt ist, den Konstruktionsalgorithmus auszuführen, der aus den eingelesenen Part-Parametern das Part-spezifische Greifwerkzeug konstruiert und dazu einen Greifwerkzeugdatensatz als Ergebnis bereitstellt und/oder ausgibt.

In einem weiteren Aspekt bezieht sich die vorliegende Erfindung auf eine Verarbeitungsmaschine, z.B. eine Schneid- oder Biegemaschine mit einer Konstruktionseinheit, wie vorstehend beschrieben.

Bei der Verarbeitungsmaschine handelt es sich vorzugsweise um eine Metallverarbeitungsmaschine, insbesondere eine Laseranlage, wie z.B. eine Laserschneidmaschine oder eine Biegemaschine. Die von der Verarbeitungsmaschine verarbeiteten Teile - hier Parts genannt - müssen transportiert werden. Dazu müssen sie abhängig von der Größe, Form, Gewicht, Material und/oder sonstigen Parametern des Parts spezifisch gegriffen werden.

Die Laserschneidanlage kann sequentiell unterschiedliche oder übereinstimmende Schneidpläne für unterschiedliche Bleche ausführen. Das Schneidergebnis mit den geschnittenen Parts muss in jedem Fall transportiert und insbesondere absortiert werden. Mit dem hier vorgeschlagenen Konstruktionsalgorithmus wird es vorteilhafterweise möglich, das Greifwerkzeug derart zu konstruieren und zu konzipieren, dass es für mehrere Schneidpläne und damit für mehrere Sequenzen geschnittener Parts geeignet ist. Wird z.B. ein erstes Blech mit einem ersten Schneidplan geschnitten und anschließend ein zweites Blech mit einem zweiten Schneidplan (somit mit anderen geschnittenen Parts), so kann das Greifwerkzeug vorteilhafterweise gleich für mehrere Schneidpläne der Schneidmaschine ausgelegt werden, die nacheinander auf der Maschine ausgeführt werden. Damit können Rüstzeiten für die Bestückung des Greifwerkzeuges vermieden werden und die Prozesszeit insgesamt kann verringert werden.

Bei den Parts handelt es sich um Teile bzw. Bauteile, die von der Verarbeitungsmaschine bearbeitet werden oder bereits in verarbeiteter Form vorliegen, z.B. als ausgeschnittenen Teile, die aus einem Werkstück oder Restgitter mit einer Laserschneidmaschine in ausgeschnittener Form vorliegen und aus dem Restgitter entnommen werden müssen. Die Parts können eine im Wesentlichen zweidimensionale Form (geschnittenen Blechteile) oder eine dreidimensionale Form (Biegeteile) haben. Die Parts können eine symmetrische oder asymmetrische Form aufweisen. Es liegt auf der Hand, dass kleine, flache Teile bzw. Parts mit einem anderen Greifwerkzeug gegriffen werden können als große, dicke Metallparts, die möglicherweise auch mehrere Greifwerkzeuge für die Greifaufgabe erfordern. Die Parts sind in einer bevorzugten Ausführungsform der Erfindung aus Metall und werden durch den Schneidplan definiert. Die Parts können unterschiedliche Form, Größe und/oder Gewicht haben. Auch das Material und/oder die Dichte des Parts können unterschiedlich sein.

Das Greifwerkzeug dient zum Greifen eines oder mehrerer Parts zum Transport des Parts, beispielsweise zum Absortieren von Parts vom Wechsel- oder Schneidtisch oder zum Abtransport des Restgitters vom Wechseltisch, zum anderweitigen Transport, zum Sortieren, Entnehmen, Zufügen, Stapeln, Biegen. Die Greifaufgabe kann mittels eines Roboters ausgeführt werden, etwa im Rahmen eines kartesischen Systems einer Pick and Place Anwendung. Das Greifwerkzeug kann ausgelegt sein, um genau ein Part zu greifen, beispielsweise mittels eines pneumatischen oder magnetischen Saugers. Das Greifwerkzeug kann jedoch auch ausgelegt sein, um gleichzeitig mehrere Parts zu greifen, z.B. benachbarte Parts mittels eines einzelnen Greifwerkzeuges zu entnehmen. Bei komplexen Parts kann es auch notwendig sein, mehrere Greifwerkzeuge für ein Part bereitzustellen, um das Part zu transportieren. Dies kann z.B. dann wichtig sein, wenn das Part sehr schwer und/oder groß ist und/oder wenn die Greif- oder Transportaufgabe spezielle Anforderungen bzw. Voraussetzungen hat, wie z.B., dass das Part nur in einem absolut horizontalen Zustand bewegt werden darf.

Das Greifwerkzeug kann modular aufgebaut sein. Das Greifwerkzeug kann zumindest eine pneumatische, mechanische, magnetische und/oder adhäsive Greifkomponente umfassen. Das Greifwerkzeug kann ein Verbindungselement zur Verbindung (mechanisch und elektronisch) mit einem Aktor/Antriebselement, z.B. in Form eines Roboterarmes, umfassen. An dem Verbindungselement können weitere mechanische Bauteile angeordnet sein (z.B. Winkel), die zur Aufnahme einer Grundplatte oder eines Halters dienen können. An der Grundplatte ist zumindest eine Greifkomponente - vorzugsweise lösbar - befestigt. Je nach Ausführungsform der Erfindung und Konfiguration können an der Grundplatte auch mehrere unterschiedliche oder gleiche Greifkomponenten befestigt sein. Je nach Greifaufgabe und Part werden die Greifkomponenten berechnet und das Greifwerkzeug kann mit den berechneten Greifkomponenten bestückt werden.

Der Begriff "Part-Parameter" betrifft eine Menge von Parametern, die das zu greifende Teil charakterisieren hinsichtlich seiner physikalischen, mechanischen und/oder weiteren technischen Eigenschaften, wie etwa Größe, Form, Gewicht, Material etc. In einer bevorzugten Weiterbildung der Erfindung kann zumindest ein Part-Parameter aus anderen Part-Parametern und/der anderen charakterisierenden Werten berechnet werden.

Der Konstruktionsalgorithmus ist eine Rechenvorschrift, die aus den eingelesenen Part-Parametern das Part-spezifische Greifwerkzeug konstruiert und dazu einen Greifwerkzeugdatensatz als Ergebnis ausgibt.

In der folgenden detaillierten Figurenbeschreibung werden nicht einschränkend zu verstehende Ausführungsbeispiele mit deren Merkmalen und weiteren Vorteilen anhand der Zeichnung besprochen.

Kurze Beschreibung der Figuren
- Fig. 1: zeigt eine Darstellung einer Laserschneidmaschine mit einem Wechseltisch auf dem geschnittene Parts liegen und von einer Roboter-basierten Greifvorrichtung absortiert werden müssen;
- Fig. 2: eine schematische Darstellung einer Recheneinheit, die als Konstruktionseinheit KO ausgebildet ist und auf Basis der Parts-Parameter zur Berechnung eines Konstruktionsdatensatzes bestimmt ist;
- Fig. 3: eine Ablaufdiagramm eines Verfahrens gemäß einer bevorzugten Ausführungsform der Erfindung;
- Fig. 4a und 4b: eine Seitenansicht jeweils eine Greifvorrichtung mit einem ein- und zweielementigen Greifwerkzeug gemäß einer bevorzugten Ausführungsform der Erfindung.
- Fig 5: eine Beispieldarstellung eines Blechteils mit Ausschnitten zur Berechnung der Positionierung des/der Greifer(s);
- Fig. 6: eine weitere Beispieldarstellung eines Blechteils mit Ausschnitten zur Berechnung der Positionierung des/der Greifer(s);
- Fig. 7: eine weitere Beispieldarstellung eines Blechteils mit Ausschnitten zur Berechnung der Positionierung des/der Greifer(s);
- Fig. 8: eine alternative Form des Greiferhalters in Form einer U-Schiene gemäß einer bevorzugten Ausführungsform der Erfindung.

### Detaillierte Beschreibung der Erfindung

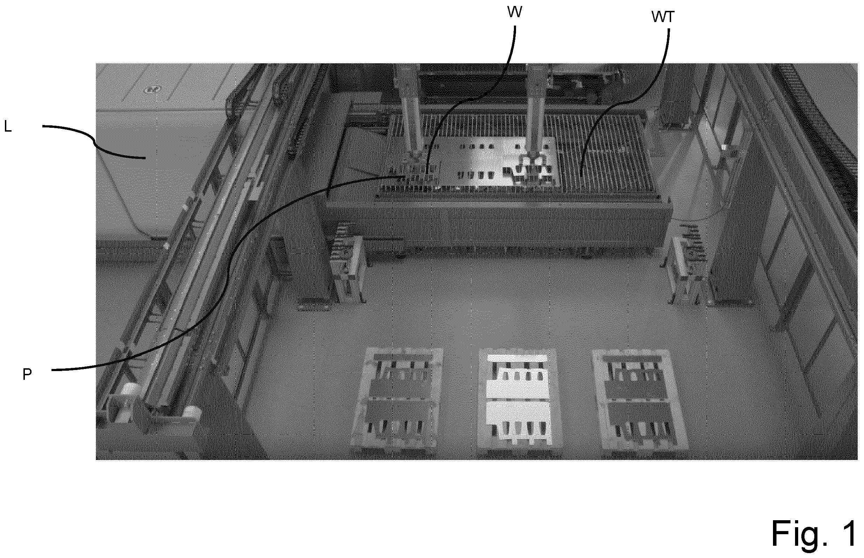

**Fig. 1** zeigt in einer beispielhaften Darstellung einen Wechseltisch WT für eine Laserverarbeitungsmaschine, insbesondere einer Laserschneidanlage L, auf dem geschnittene Parts P liegen, die von dort mittels einer Roboter-basierten Greifvorrichtung gegriffen und transportiert werden müssen, insbesondere müssen die Parts P aus dem Restgitter entfernt und z.B. auf Paletten gestapelt werden. Es können - je nach Schneidplan - unterschiedliche Typen (Formen, Größen) von Parts P zu transportieren und damit auch zu greifen sein.

Je nach Größe, Form und weiteren Parametern des Parts P sind unterschiedliche Greifwerkzeuge W notwendig, um die Greifaufgabe erfüllen zu können. So erfordern beispielsweise große und schwere Parts P mehr oder leistungsstärkere Greifwerkzeuge W, insbesondere mit entsprechend mehr oder leistungsstärkeren Greiferkomponenten (z.B. mechanische, magnetische oder pneumatische Sauger) als kleine, leichte Parts. Die Konstruktion des Greifwerkzeuges W ist erfindungsgemäß vorteilhafterweise Part-spezifisch. Eine erste Menge von Parts P₁ wird somit mit einem ersten Greifwerkzeug W₁ gegriffen, während eine zweite Menge von Parts P₂ mit einem zweiten Greifwerkzeug W₂ gegriffen wird etc. Die Menge kennzeichnet sich durch die jeweiligen Part-parameter P. Die Part-Parameter P können teilweise oder vollständig aus dem Schneidplan der Laserverarbeitungsmaschine berechnet werden.

Das Greifwerkzeug W kann über ein Verbindungselement, wie z.B. einen sogenannten Greiferhalter oder eine Greiferplatte an einem Roboterarm befestigt. Der in den drei Raumachsen bewegliche Roboterarm mit dem Greifwerkzeug W bildet eine Greifvorrichtung.

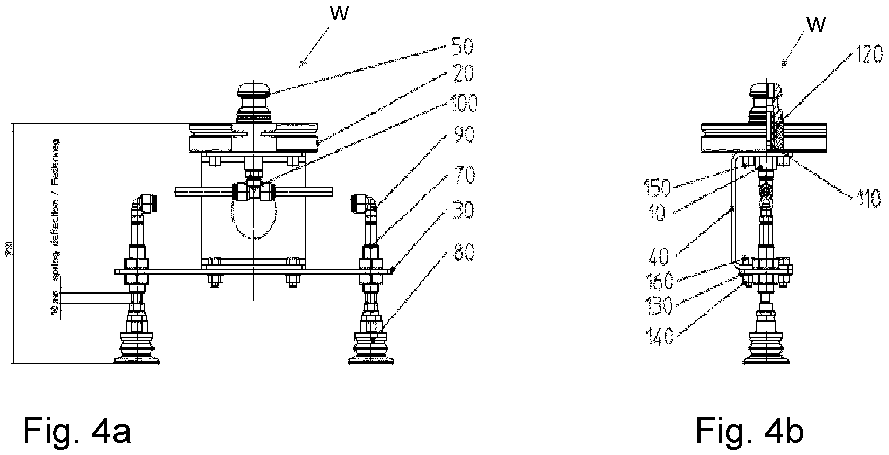

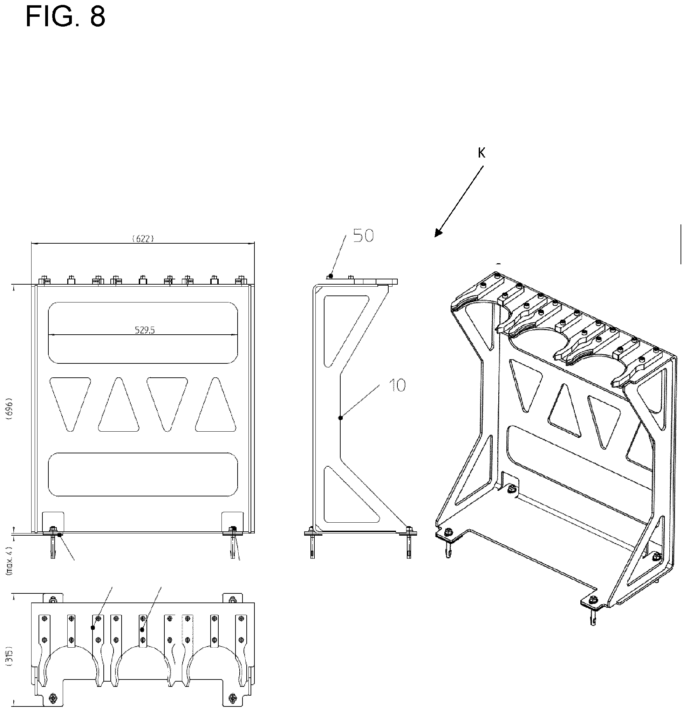

In einer bevorzugten Ausführungsform der Erfindung wird die Greiferplatte 30 (Fig. 4a) oder der Greiferhalter (Schiene) 40 (Fig. 4b), 10 (Fig. 8) automatisch konstruiert, falls keine Normteile (z.B. Sauger 80) zur Verfügung stehen oder für die anstehende Greifaufgabe verwendbar sind. Die Greiferplatte 30, 40 wird so konstruiert, dass die notwendigen Komponenten K an der (von der Positionsberechnungsfunktion PBF) berechneten Position befestigt werden können.

Grundsätzlich fertigen die Endkunden von Laserschneidsystemen Blechteile in den unterschiedlichsten und nicht vorhersehbaren Variationen. Die geschnittenen Parts P werden anschließend von einer Sortiervorrichtung mittels (z.B. Vakuum- und/oder Magnet-) Greifwerkzeug entnommen und auf einer Palette platziert. Zu diesem Zweck kann bei den bekannten Anlagen eine begrenzte Anzahl vorbereiteten Greifvorrichtungen angeboten werden. Das Problem der im Stand der Technik bekannten Anlagen ist, dass diese Greifvorrichtungen nicht für alle möglichen Parts passen können (weil z.B. ein Saugnapf über einem Loch liegen könnte oder der Greifer nicht die Teilegeometrie abdeckt). Problematisch ist weiter, dass für die Konstruktion von neuen, passenden Greifvorrichtungen häufig nicht das notwendige Konstruktionswissen vorhanden ist. Hier setzt die Erfindung an und stellt ein Verfahren (als Anwendung oder Applikation) und eine Konstruktionseinheit KO bereit, die automatisch einen passenden Greifer konzipiert und am Ende als 3D-File mit Stückliste ausgibt. In die Anwendung wird eine elektronische Beschreibung (z.B. STEP Datei) eines Blechteils geladen. Die Anwendung überprüft, ob bereits vorhandene Greifer vor Ort verfügbar oder bereitstellbar sind. Falls kein bestehender Greifer passt, wird automatisch ein passendes Greifwerkzeug G konstruiert. Dabei bedient sich das Verfahren einer Datenbank von Bauteilen, insbesondere angelegt im Baukastenprinzip, um den Greifer automatisch zu konstruieren. Hinterlegt sind beispielsweise verschiedene (Sauger, Magnete, Schlauche, Grundplatten etc.). Bei dem Konstruktionsalgorithmus werden unter anderem Faktoren, wie Dimensionen des Teils, Gewicht, Schwerpunkt, Ausschnitte und/oder Biege-Problematiken verrechnet und berücksichtigt. Nach dem Konstruieren des Greifers wird eine fertige Baugruppe als elektronische Beschreibung (z.B. STEP Datei) inkl. Stückliste ausgegeben.

Vorteilhafterweise werden bei der Konstruktion des Greifwerkzeuges mehrere Parts P eines Schneidplans sp oder sogar mehrere Schneidpläne berücksichtigt. Somit kann das Verfahren sehr effizient ausgeführt werden, indem - falls möglich - mitunter nur ein Greifwerkzeug für eine Menge von unterschiedlichen Schneidplänen berechnet und bereitgestellt werden muss. Somit ist kein Wechsel des Greifroboters notwendig und die Greifaufgabe kann auch für unterschiedliche Parts P und/oder für unterschiedliche Schneidpläne von ein und demselben Greifwerkzeug ausgeführt werden.

Dazu führt die Erfindung einen Konstruktionsalgorithmus KA auf einer Computereinheit CPU (z.B. einem Computer, einem Computernetzwerk, Prozessor, Microprozessor oder einem embedded device) aus.

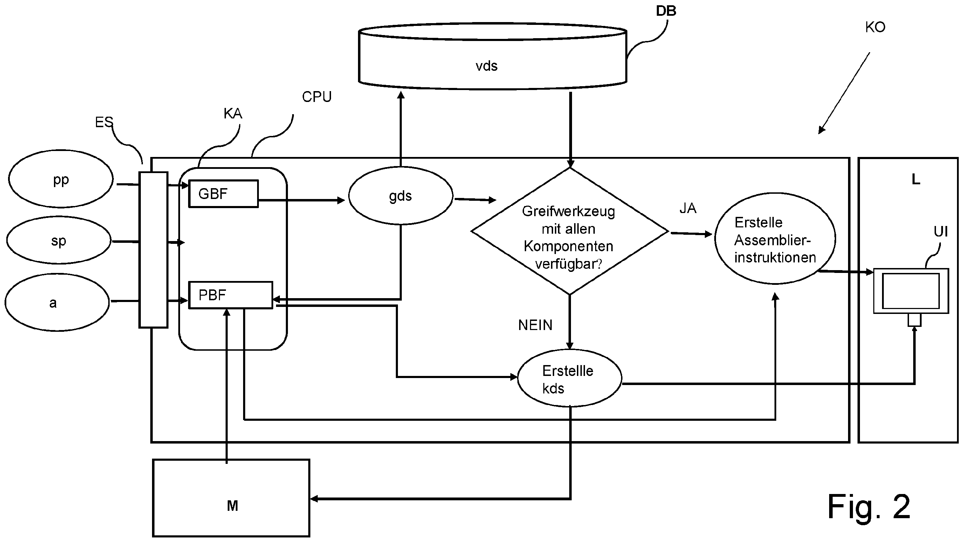

**Fig. 2** zeigt in der Art eines Blockdiagramms eine Konstruktionseinheit KO, die als elektronische Einheit zur Ausführung des Verfahrens bestimmt ist. Die Konstruktionseinheit KO umfasst eine Einlese-Schnittstelle ES zum Einlesen von Part-Parametern pp für zumindest ein von der Verarbeitungsmaschine L verarbeitetes und zu greifendes Part P sowie eine Verarbeitungseinheit CPU, die in Antwort auf die eingelesenen Part-Parameter pp dazu bestimmt ist, den Konstruktionsalgorithmus KA auszuführen, der aus den eingelesenen Part-Parametern pp das Part-spezifische Greifwerkzeug W konstruiert und dazu einen Greifwerkzeugdatensatz gds als Ergebnis - insbesondere auf einer Benutzerschnittstelle UIausgeben kann oder weiteren Berechnungsschritte ausführt. Falls für die geforderten Greifaufgabe kein Greifwerkzeug konstruiert werden kann, kann auf der Benutzeroberfläche UI eine Fehlernachricht ausgegeben werden. Wie in Fig. 2 schematisch gezeigt, kann der berechnete Greifwerkzeugdatensatz gds in der Konstruktionseinheit KO weiterverarbeitet werden. Dazu können weiterhin von einer Datenbank DB Verfügbarkeitsdaten bzw. ein Verfügbarkeitsdatensatz vds eingelesen werden, der die lokale Verfügbarkeit von Greifwerkzeugen W und deren Komponenten K auf oder an oder für den Laser L repräsentiert. Die beiden Datensätze: Greifwerkzeugdatensatz gds und Verfügbarkeitsdatensatz vds werden mittels eines weiteren Algorithmus zu einem Ergebnis in Form eines Konstruktionsdatensatzes kds berechnet. Der Konstruktionsdatensatz kds spezifiziert, nach welchen Maßgaben das Greifwerkzeug W konstruiert werden muss. Dazu enthält der Konstruktionsdatensatz kds Konstruktionsinstruktionen und eine Auswahl an erforderlichen Greifkomponenten K sowie Positionierungsangabe für die erforderlichen Greifkomponenten K. Dies hat den Vorteil, dass der Konstruktionsdatensatz kds nur dann berechnet werden muss, wenn das Greifwerkzeug W in der geforderten Ausprägung nicht vorrätig ist. Damit können Rechenressourcen eingespart werden.

Wie in Fig. 2 schematisch gezeigt, kann auch ein Schneidplan sp eingelesen werden. Aus dem Schneidplan sp können mittels eines weiteren Algorithmus die Part-Parameter pp berechnet werden. Es ist möglich, sowohl die Part-Parameter pp als auch den Schneidplan sp einzulesen, um z.B. mit den Daten aus dem Schneidplan sp die eingelesenen Part-Parameter pp auf Korrektheit zu verifizieren. Alternativ kann auch nur der Schneidplan sp oder nur die Part-Parameter pp eingelesen werden. Die eingelesenen Daten (Part-Parameter pp und/oder Schneidplan sp) können auch als STEP-Datei eingelesen werden.

Die Datenbank DB kann, wie in dem in Fig. 2 gezeichneten Beispiel, als externe, separate Instanz über entsprechenden Datenverbindungen (LAN; WLAN) an die Konstruktionseinheit KO angeschlossen sein und z.B. zentral vorgehalten werden. Die Datenbank DB kann jedoch ebenso auch intern und lokal auf der Konstruktionseinheit KO ausgebildet sein. Dasselbe gilt für die Benutzerschnittstelle UI. Sie kann lokal auf der Konstruktionseinheit KO oder auf einer anderen elektronischen Instanz, z.B. auf einer mobilen Einheit mit entsprechenden Datenverbindungen (Smartphone etc.) ausgebildet sein.

Wie in Fig. 2 gezeigt, kann die Konstruktionseinheit KO mit einem Modell M interagieren. Das Modell M enthält elektronische Datensätze, die die mechanischen Eigenschaften des jeweiligen Parts P kennzeichnen, wie Schwerpunkt, Gewicht, Länge, Breite und/oder weitere part-spezifische Parameter, die für eine bestimmte Greifaufgabe ein bestimmtes Greifwerkzeug spezifizieren. Das Modell M kann selbstlernend ausgebildet sein und mit dem berechneten Greifwerkzeugdatensatz gds und/oder Konstruktionsdatensatz kds als Feedbackgrössen gespeist werden. Des Weiteren können noch weitere Feedbackgrössen berücksichtigt werden, wie z.B. eine Bewertung des Anwenders über die Qualität der automatischen Konstruktion.

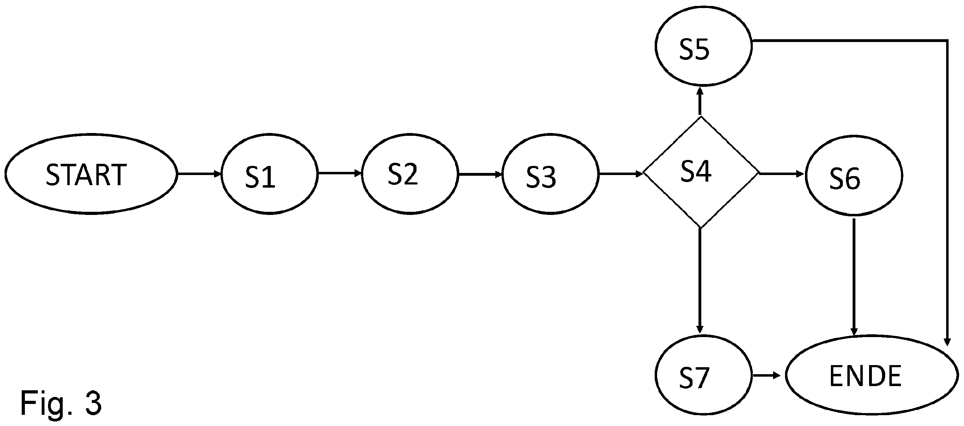

**Fig. 3** zeigt den Ablauf des Verfahrens gemäß einer bevorzugten Ausführungsform der Erfindung. Nach dem Start des Verfahrens werden in Schritt S1 die Part-Parameter über die Einlese-Schnittstelle ES eingelesen. Zusätzlich oder alternativ kann in Schritt S2 der Schneidplan sp eingelesen werden. Es ist auch möglich, dass der Schneidplan oder zumindest Teile davon in den Part-Parametern enthalten sind und somit in Schritt S1 nur der Schneidplan sp eventuell mit ausgewählten Part-Parametern pp eingelesen wird. In Schritt S3 wird der Konstruktionsalgorithmus KA mit den eingelesenen Daten ausgeführt und den Greifwerkzeugdatensatz gds bereitzustellen. Der Greifwerkzeugdatensatz gds kann im einfachsten Fall aus einer Menge von Normteilen bestehen, die für den Roboterarm vorrätig sind. Der Roboter muss dann die Normteile nur aus einem Vorratslager auswählen und an der richtigen Position positionieren, was anhand der berechneten Position erfolgt. In Schritt S4 wird die lokale Verfügbarkeit des konstruierten Greifwerkzeuges W mit seinen Komponenten K geprüft. Falls das für die jeweilige Greifaufgabe für das zu greifenden Part P Greifwerkzeug W vorhanden ist, muss kein Konstruktionsdatensatz kds erstellt werden. Es ist lediglich notwendig, dass in Schritt S5 ein Befehl erzeugt wird, mit dem z.B. der Roboter oder ein anderer Aktor das Greifwerkzeug W oder dessen Bauteile oder Komponenten K aus dem Lager auswählt und entnimmt. Andernfalls, falls also die notwendigen Komponenten K nicht vorrätig sind und das Greifwerkzeug W eigens konstruiert werden muss, wird in Schritt S 6 der Konstruktionsdatensatz kds berechnet und kann auf der Benutzerschnittstelle Ul ausgegeben und/oder als Datei, insbesondere STEP Datei an weitere elektronische Instanzen weitergegeben werden. Es ist auch möglich, dass für die Greifaufgabe für das jeweilige Part P kein Greifwerkzeug konstruiert werden kann (z.B. zu schwer, zu groß etc.). In diesem Fall wird in Schritt S7 die Fehlernachricht ausgegeben (z.B. auf der UI) und/oder an weitere Instanzen bereitgestellt.

**Fig. 4a** **und b** zeigen den Aufbau einer Greifvorrichtung. Diese umfasst einen Roboter-basierten Aktor (z.B. Roboterarm, nicht gezeigt), der über eine Kupplung 50 mit der Greifvorrichtung verbunden ist. Die Greifvorrichtung beinhaltet das Greifwerkzeug W, das hier als Sauger 80 ausgebildet ist. Die Greifvorrichtung beinhaltet des Weiteren einen Flansch 20, einen Pneumatik Verteiler 100, einen Pneumatik Anschluss 90 sowie einen Federstössel 70. Die Greifvorrichtung umfasst eine Greiferplatte oder einen anders geformten Greiferhalter (etwa eine u-förmige Schiene), an der/dem - in diesem Beispiel zwei - Sauger 80 positioniert und befestigt sind. Fig. 4b zeigt eine Greifvorrichtung mit einem u-förmigen Montagewinkel 40, der in diesem Fall als Greiferhalter ausgebildet ist und zur Aufnahme und Befestigung eines Saugers dient. Der Montagewinkel 40 kann über eine Unterlegscheibe 110 und einen Ring 120 an die Kupplung 50 angeschlossen werden. Die Greifvorrichtung umfasst in diesem Beispiel einen Stopfen 10, Schrauben 160 und am unteren Teil des Montagewinkels 40 nochmals weitere Unterlegscheiben 130 und Muttern 140 zur Befestigung des Part-spezifischen Saugers. Weitere Verbindungsmodule können zur Aufnahme der modularen Greifkomponenten K, z.B. der Sauger 80, dienen. Die Greifkomponenten K können grundsätzliche unterschiedliche Arten von Saugern 80 (pneumatisch, magnetisch, adhäsiv etc.) und/oder andere (z.B. mechanische) Greifkomponenten K umfassen. Die Komponenten K werden spezifisch für die jeweilige Greifaufgabe in Bezug auf das zu greifenden Part P ausgewählt.

Zusammenfassend wird ein Verfahren (und eine entsprechende Vorrichtung) bereitgestellt, das anhand einer Input-Konstruktion (z.B. STEP eines Parts bzw. Blechteils) ermittelt, ob und welche(r) der bestehenden Greifkomponenten (z.B. Greifköpfe) auf das Part passen würden. Falls keine bestehende Komponente passt, konstruiert die Software anhand einer mitgelieferten Teile-Datenbank automatisch einen passenden Greifkopf. D.h. das Verfahren gibt eine fertige Baugruppe (z.B. als STEP-File inkl. Stückliste) als Ergebnis aus. Bei der Berechnung mittels des Konstruktionsalgorithmus werden Faktoren, wie Dimension des Teils, Gewicht und/oder Biege-spezifische Parameter und Problematiken berücksichtigt. Ausserdem kommuniziert das Verfahren, aus welchen Gründen eine automatische Konstruktion in bestimmten Fällen nicht möglich ist.

Der Konstruktionsalgorithmus KA umfasst zumindest zwei Funktionen:
1. Eine Greiferbestimmungsfunktion GBF und
2. Eine Positionsberechnungsfunktion PBF.

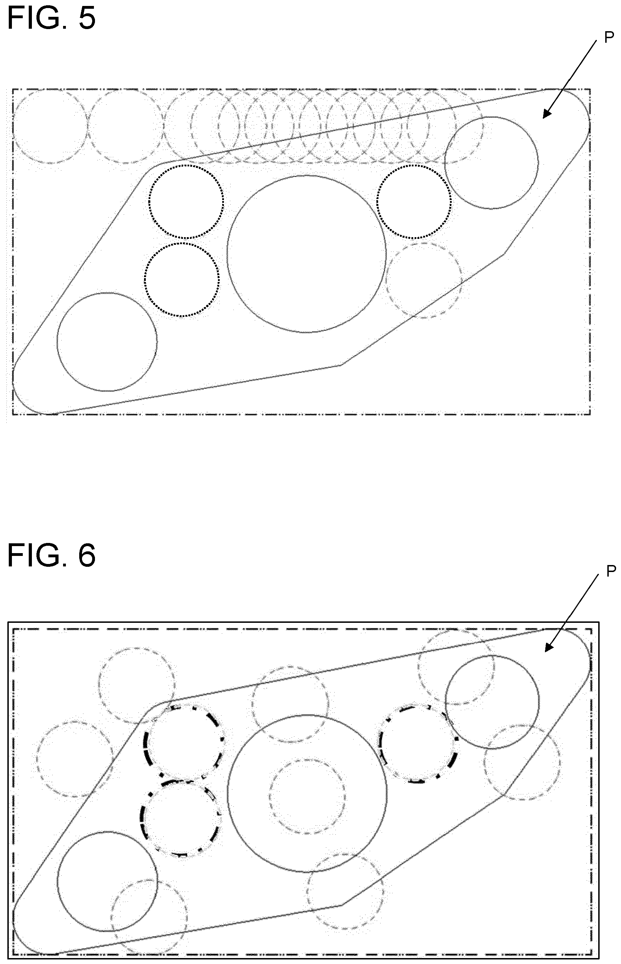

Die Positionsberechnungsfunktion PBF kann mittels eines Brute Force Algorithmus implementiert werden. Der Brute Force Algorithmus basiert auf folgenden Aspekten, die in Zusammenhang mit der Schemazeichnung von **Fig. 5** erläutert werden:
1. Um die optimale Position des Greifkopfes auf dem Blechteil zu berechnen, werden die möglichen Positionen, die der Vakuumgreifer haben könnte, nacheinander überprüft. Fig. 5 zeigt die Simulation der Suche nach den Positionen eines Vakuumgreifers.
2. Der Abstand zwischen den Kreisen bei der Suche nach möglichen Positionen kann parametrisiert werden. Zum Beispiel, in Fig. 5 haben die beiden Kreise oben links einen größeren Abstand als die Kreise, die rechts folgen. Je grösser der Abstand zwischen den Kreisen, desto schneller wird die Suche sein, aber desto geringer ist die Chance, eine gute Lösung zu finden.
3. Wenn keine oder keine gute Lösung gefunden wird (in Fig. 5 z.B. die oberste Reihe der Kreise mit einer Strichlinie repräsentiert), kann der Prozess mit einem kleineren Abstand wiederholt werden, um mehr mögliche Positionen zu finden.
4. Nach Erhalt der möglichen Positionen (siehe die gepunkteten Kreise in Fig. 5, in diesem Beispiel 3/drei Positionen) wird eine Kopfbasis gesucht, die zu den gefundenen Positionen der Vakuumgreifer passt.
5. Wenn es keinen bestehende Greifkopf gibt, wird die optimale Lösung vom System gewählt, um einen neuen Greifkopf zu generieren.

Eine weitere, zweite Möglichkeit, die Positionsberechnungsfunktion zu implementieren, besteht in dem zufallsbasierten Algorithmus, der nachstehend unter Bezugnahme auf **Fig. 6** erklärt wird:
In diesem zweiten Vorschlag (vgl. Fig. 6) werden die Saugnapfpositionen nach dem Zufallsprinzip generiert (alle Kreise). Wie in der Monte-Carlo-Simulation wird eine große Anzahl von Zufallswerten erzeugt, die dann verglichen werden, um zu sehen, ob sie mögliche Kandidaten sind oder nicht.
1. Für die möglichen Saugerpositionen werden eine Vielzahl von Zufallswerten erzeugt. In Fig. 6 repräsentieren die gestrichelten dünnen Kreise, Positionen, die nicht den Anforderungen entsprechen; und die fett eingezeichneten, strichpunktierten Kreise sind Positionen, die den Anforderungen entsprechen (in diesem Beispiel 3/drei Positionen).
2. Nach Erhalt der möglichen Positionen (siehe die fett eingezeichneten, strichpunktierten Kreise in Fig. 6) wird ein Greifkopf gesucht, der zu einer der gefundenen Vakkumpositionen passt.
3. Wenn es keine mögliche Lösung gibt, wird die optimale Lösung gewählt, um einen neuen Greifkopf.

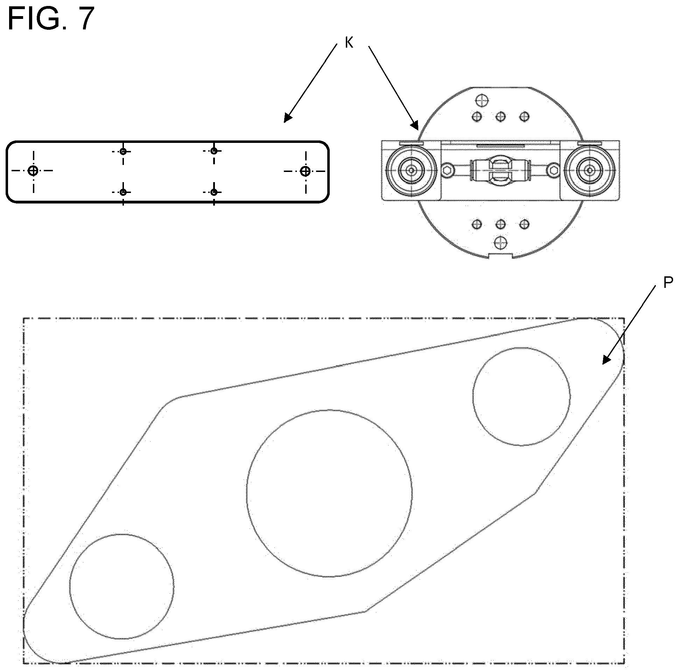

Eine weitere, dritte Möglichkeit, die Positionsberechnungsfunktion zu implementieren, besteht in dem Misch-Algorithmus, der nachstehend unter Bezugnahme auf **Fig.** 7 erklärt wird:
Einer der großen Nachteile der oben genannten Algorithmen ist, das System muss eine sehr große Anzahl von möglichen Positionen ermitteln, um eine (fast) optimale Lösung zu erhalten. Das System besitz also eine gewisse prozentuelle Ungenauigkeit. Die dritte Version ist eine Mischung aus den beiden vorherigen Versionen, die versucht, die Vorteile beider Versionen zu nutzen.

Der Prozess beginnt mit der zweiten vorgeschlagenen Version (Positionen berechnen - Zufallsprinzip). Zuerst werden die möglichen Positionen der Vakuumgreifer zufällig gesucht (wie vorstehend erläutert). Aus den gefundenen möglichen Positionen berechnet der Brute Force Algorithmus die möglichen Positionen in der Nähe des gefundenen Punktes, um die bestmöglichen Positionen zum Anheben des Blechteils zu finden. Dies erhöht nicht nur die Wahrscheinlichkeit, eine bessere Position zu finden, sondern macht den Prozess auch viel schneller.

Darüber hinaus bestehen weitere Implementierungsmöglichkeiten zur Positionsberechnungsfunktion in der Anwendung von Methoden der Artificial Intelligence, Deep Learning, etc. Weiterhin können für die Berechnung der Durchbiegung der Teile physikalische Modelle beigezogen werden oder Standard Formeln, um die Sauger so zu platzieren, dass keine oder geringe Durchbiegung entsteht beim Entnehmen.

**Fig. 8** zeigt ein weiters Beispiel für einen Greiferhalter in Form eines Wechselrahmens der hier mit dem Bezugszeichen 10 gekennzeichnet ist. Im Wechselrahmen können Bohrungen 50 ausgebildet sein, um weitere Verbindungselemente, wie vorstehend im Zusammenhang mit den Fig. 4 a und b erläutert, aufzunehmen.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Laserschneidanlagen angewendet werden kann, sondern auch für andere Maschinen und Anlagen in der Produktion, die das Greifen von Teilen oder Bauteilen erfordern. Des Weiteren können die Bauteile der Vorrichtung bzw. der Konstruktionseinheit auf mehrere physikalische Produkte verteilt realisiert werden kann.

### BEZUGSZEICHEN

- L: Verarbeitungsmaschine, insbesondere Laserschneidmaschine
- P: Parts bzw. Bauteile
- WT: Wechseltisch
- W: Greifwerkzeug
- K: Komponente des Greifwerkzeugs
- KO: Konstruktionseinheit
- CPU: Recheneinheit
- KA: Konstruktionsalgorithmus
- ES: Einlese-Schnittstelle
- pp: Parts-Parameter
- gds: Greifwerkzeugdatensatz
- kds: Konstruktionsdatensatz
- vds: Verfügbarkeitsdatensatz
- fn: Fehlernachricht
- UI: Benutzerschnittstelle
- S1: Bereitstellen von Part-Parametern
- S2: Einlesen von einem Schneidplan
- S3: Ausführen des Konstruktionsalgorithmus zur Berechnung des Greifwerkzeugdatensatzes
- S4: Prüfen der lokalen Verfügbarkeit aller Komponenten K/Greifwerkzeug W
- S5: Erzeugen von Assemblierinstruktionen
- S6: Erzeugen eines Konstruktionsdatensatzes
- S7: Erzeugen einer Fehlernachricht

## Patentansprüche

1. Computer-implementiertes Verfahren zum Berechnen eines Konstruktionsdatensatzes (kds) zur Konstruktion eines Part-spezifischen Greifwerkzeuges (W) zum Greifen von Parts (P), die von oder zu einer Verarbeitungsmaschine (L) transportiert werden müssen, mit folgenden Verfahrensschritten:
- Bereitstellen (S1) von Part-Parametern (pp) für zumindest ein Part (P), das mit dem Part-spezifischen Greifwerkzeug (W) gegriffen werden soll;
- Ausführen (S3) eines Konstruktionsalgorithmus (KA), der aus den bereitgestellten Part-Parametern (pp) das Part-spezifische Greifwerkzeug (W) konstruiert und dazu einen Greifwerkzeugdatensatz (gds) als Ergebnis bereitstellt.

2. Computer-implementiertes Verfahren nach dem vorangehenden Anspruch, bei dem die Part-Parameter (pp) umfassen: ein Gewicht und/oder einen Schwerpunkt des Parts (P), Ausschnitte oder Auskragungen im Part und/oder Biege-relevante Parameter und/oder weitere konstruktive und/oder Material-basierte Parameter des Parts (P).

3. Computer-implementiertes Verfahren nach einem der vorangehenden Ansprüche, bei dem der Konstruktionsalgorithmus (KA) zweiteilig ist und eine Greiferbestimmungsfunktion (GBF) zur Bestimmung der Art, der Größe und/oder der Anzahl der minimal erforderlichen Greifer und eine Positionsberechnungsfunktion (PBF) zur Bestimmung der Position jedes Greifers umfasst.

4. Computer-implementiertes Verfahren nach Anspruch 3, bei dem in der Positionsberechnungsfunktion (PBF) eine Positionsangabe für eine Komponente (K) des Greifwerkzeuges (W) konfigurierbar ist.

5. Computer-implementiertes Verfahren nach Anspruch 3 oder 4, bei dem in der Positionsberechnungsfunktion (PBF) zumindest ein Beschleunigungswert als Eingangsgröße verarbeitet wird und/oder bei dem die Positionsberechnungsfunktion (PBF) einen Brute-Force-Algorithmus, einen zufallsbasierten Algorithmus und/oder eine Mischform ausführt.

6. Computer-implementiertes Verfahren nach einem der vorangehenden Ansprüche, bei dem in Antwort auf den bereitgestellten Greifwerkzeugdatensatz (gds) auf eine Datenbank (DB) zugegriffen wird, in der Verfügbarkeitsdaten (vds) vorgehalten sind, die repräsentieren, welche Greifwerkzeuge (W) und/oder welche Greifwerkzeugkomponenten (K) lokal und aktuell auf der Verarbeitungsmaschine (L) verfügbar sind, um zu prüfen (S4), ob das für das zu greifende Part konstruierte Greifwerkzeug (W) mit den Komponenten (K) lokal verfügbar ist und bei dem bejahendenfalls Assemblierinstruktionen berechnet werden, um das Part-spezifischen Greifwerkzeug (W) assemblieren zu können.

7. Computer-implementiertes Verfahren nach einem der vorangehenden Ansprüche, bei dem aus dem Greifwerkzeugdatensatz (gds) ein Konstruktionsdatensatz (kds) berechnet wird (S6), falls das konstruierte Greifwerkzeug (W) mit seinen Komponenten nicht lokal verfügbar ist.

8. Computer-implementiertes Verfahren nach einem der vorangehenden Ansprüche, bei dem der Konstruktionsdatensatz (kds) eine Stückliste für das konstruierte Greifwerkzeug (W) mit Komponenten (K) und Verbindungsteilen beinhaltet und insbesondere einen Greiferhalter (10, 30) konstruiert.

9. Computer-implementiertes Verfahren nach einem der vorangehenden Ansprüche, bei dem das Greifwerkzeug (W) aus einer Menge von Greifwerkzeugkomponenten (K) modular aufgebaut ist und/oder von einem Roboter im Rahmen einer Pick-and-Place Anwendung betrieben wird.

10. Computer-implementiertes Verfahren nach einem der vorangehenden Ansprüche, bei dem zum Ausführen des Konstruktionsalgorithmus (KA) zusätzlich zu den Part-Parametern (pp) ein elektronischer Schneidplan (sp) der Verarbeitungsmaschine (L), die als Schneidmaschine ausgebildet ist, bereitgestellt wird.

11. Computer-implementiertes Verfahren nach einem der vorangehenden Ansprüche, bei dem eine Fehlernachricht erzeugt und ausgegeben wird, falls eine Konstruktion des Greifwerkzeuges (W) für das zu greifende Part (P) nicht möglich ist.

12. Computer-implementiertes Verfahren nach einem der vorangehenden Ansprüche, bei dem eine Schnittstelle zu einer Bestellapplikation ausgebildet ist, so dass auf ein Instruktionssignal hin, ein automatischer Bestellvorgang für das gemäß Konstruktionsdatensatz (kds) konstruierte Greifwerkzeug (W) ausgelöst werden kann.

13. Computerprogrammprodukt, das in einen internen Speicher eines digitalen Computers geladen werden kann und Computerprogramm-Abschnitte umfasst, mit denen das Verfahren nach den vorangehenden Verfahrensansprüchen ausgeführt wird, wenn die Computerprogramm-Abschnitte auf dem digitalen Computer ausgeführt werden.

14. Konstruktionseinheit (KO) zum Berechnen eines Konstruktionsdatensatzes (kds) zur Konstruktion eines Part-spezifischen Greifwerkzeuges (W) zum Greifen von Parts (P), die von oder zu einer Verarbeitungsmaschine (L) transportiert werden müssen, mit:
- Einer Einlese-Schnittstelle (ES) zum Bereitstellen von Part-Parametern (pp) für zumindest ein von der Verarbeitungsmaschine (L) verarbeitetes und zu greifendes Part (P);
- Einer Verarbeitungseinheit (CPU), die in Antwort auf die bereitgestellten Part-Parameter (pp) dazu bestimmt ist, einen Konstruktionsalgorithmus (KA) auszuführen, der aus den eingelesenen Part-Parametern (pp) das Part-spezifische Greifwerkzeug (W) konstruiert und dazu einen Greifwerkzeugdatensatz (gds) als Ergebnis bereitstellt.

15. Verarbeitungsmaschine (L) mit einer Konstruktionseinheit (KO) nach dem vorangehenden Anspruch.
